Europäisches Patentamt

European Patent Office

Office européen des brevets

(19)

(11) Veröffentlichungsnummer: **0 201 799**
**B1**

# (12) EUROPÄISCHE PATENTSCHRIFT

(45) Veröffentlichungstag der Patentschrift:
**06.09.89**

(21) Anmeldenummer: **86105899.8**

(22) Anmeldetag: **29.04.86**

(51) Int. Cl.⁴: **B 32 B 27/20**, B 32 B 27/32,
C 08 L 23/04, C 09 J 3/14

(54) **Opake, heissiegelbare Mehrschichtfolien aus Polyolefinen.**

(30) Priorität: **11.05.85 DE 3517081**

(43) Veröffentlichungstag der Anmeldung:
**20.11.86 Patentblatt 86/47**

(45) Bekanntmachung des Hinweises auf die Patenterteilung:
**06.09.89 Patentblatt 89/36**

(84) Benannte Vertragsstaaten:
**AT BE CH DE FR GB IT LI NL SE**

(56) Entgegenhaltungen:
**EP-A- 0 114 311**
**EP-A- 0 137 454**
**US-A- 4 230 767**

(73) Patentinhaber: **Wolff Walsrode Aktiengesellschaft,
Postfach, D-3030 Walsrode 1 (DE)**

(72) Erfinder: **Schinkel, Ingo, Dipl.-Ing., Witternstrasse 14,
D-3030 Walsrode (DE)**
Erfinder: **Böhner, Jürgen, Dipl.-Ing., Am Haselbusch 3,
D-3036 Bomlitz (DE)**

(74) Vertreter: **Zobel, Manfred, Dr., c/o BAYER AG
Konzernverwaltung RP Patentabteilung Bayerwerk,
D-5090 Leverkusen (DE)**

ACTORUM AG

## Beschreibung

Die vorliegende Erfindung betrifft opake, heißsiegelbare, orientierte Polyolefin-Mehrschichtfolien, die sich besonders als Einschlagfolien eignen.

Opake Mehrschichtfolien aus Polyolefinen, insbesondere aus einer Polypropylenbasisschicht und einer heißsiegelbaren Schicht aus Propylencopolymerisaten sind aus der DE-AS 2 814 311 bekannt.

Diese Folien haben aber den Nachteil, daß sie erst bei Temperaturen ab 125°C ausreichend feste Siegelnähte bilden, so daß dabei in der Folie verpackte Lebensmittel, vorzugsweise Süßigkeiten, in ihrer Qualität beeinträchtigt werden können. Hinzu kommt noch, daß mit den Mehrschichtfolien keine ausreichend hohen Verpackungsgeschwindigkeiten auf den automatisch arbeitenden Verpackungsmaschinen erzielt werden können.

Es stellte sich daher die Aufgabe, opake Mehrschichtfolien, insbesondere Verpackungsfolien zur Verfügung zu stellen, die nicht nur eine niedrige Siegelanspringtemperatur und hohe Siegelfestigkeit, sondern auch sehr gute optische Eigenschaften, wie Glanz, und Maschinengängigkeit auf den üblichen Verpackungsmaschinen unterschiedlichen Typs aufweisen.

Erfindungsgemäß gelang dies durch Bereitstellen einer opaken, heißsiegelbaren Mehrschichtfolie, aus einer biaxial gereckten Basisschicht aus Propylenpolymeren, die 3–15 Gew.-%, vorzugsweise 8–12 Gew.-%, eines mit dem Propylenpolymeren unverträglichen, fein verteilten Additivs enthält, und wenigstens einer mindestens monoaxial gereckten, heißsiegelbaren Schicht aus einer Kombination von

a) 66,5 bis 94,5, vorzugsweise 78 bis 89,1 Gew.-% eines linearen, statischen Ethylencopolymerisats niedriger Dichte (LLDPE),

b) 5 bis 30 Gew.-%, vorzugsweise 10 bis 20 Gew.-% eines niedermolekularen, mit dem LLDPE verträglichen Harzes, mit Ausnahme eines niedermolekularen Harzes aus $\alpha$-Olefinen mit höchstens 3 C-Atomen, wie z.B. niedermolekulares Polyethylen oder Polypropylen,

c) 0,3 bis 2, vorzugsweise 0,5 bis 1 Gew.-%, einer Mischung aus einem Polyethylenwachs und einem Oxazolinwachs,

d) 0,2 bis 1,5, vorzugsweise 0,4 bis 1 Gew.-%, Polydiorganosiloxan und

e) gegebenenfalls üblichen Additiven und Hilfsstoffen, wobei die Summe aus a) bis d) immer 100 Gew.-% ergeben muß,

Das Polymere, das die Basisschicht der erfindungsgemäßen siegelbaren Mehrschichtfolie bildet, ist ein Propylenpolymeres, das bis zu höchstens 10 Gew.-% eines weiteren $\alpha$-Olefins mit höchstens 8 C-Atomen, vorzugsweise Ethylen enthält. Vorzugsweise wird ein isotaktisches Polypropylen mit einer Dichte von 0,9 bis 0,91 g/cm$^3$ und einem Schmelzflußindex von 1 bis 4 g/10 Minuten bei 230°C, 21,6 N (nach DIN 53 735) verwendet.

Die Basisschicht enthält 3–15 Gew.-%, vorzugsweise 8–12 Gew.-%, mit den Propylenpolymeren unverträgliche Additive, vorzugsweise ein anorganisches Additiv wie CaCO$_3$, SiO$_2$, Na–Al-silikat und/oder TiO$_2$, und einer mittleren Teilchengröße von 0,2–20 µm, vorzugsweise 2–8 µm.

Es kann aber auch ein organisches, unverträgliches Additiv in der Basisschicht enthalten sein, vorzugsweise aus Polystyrol, Polymethylmethacrylat, Polytetrafluorethylen und/oder Copolymeren dieser Verbindungen in den genannten Teilchengrößen.

Unverträglich bedeutet dabei, daß solche polymeren Additive einen anderen Schmelzpunkt und/ oder ein anderes Streckverhältnis als das Propylenpolymere aufweisen, und daß es beim Streckprozess wie bei Verwendung anorganischer Additive zum Aufreißen der Polymermatrix und damit zur Vakuolenbildung kommt.

Der Hauptbestandteil der siegelbaren Schicht ist ein überwiegend lineares, statisches Ethylencopolymeres niedriger Dichte Ethylen und bis zu 12 Mol %, vorzugsweise 2–8 Mol %, wenigstens eines $\alpha$-Olefins mit C$_3$–C$_{10}$, vorzugsweise Propylen, Buten-1, Penten, Hexen, Octen, Nonen, Decen oder 4-Methylpenten-1, besonders bevorzugt 1-Buten, Hexen oder Octen. Dabei sind solche Polymerisationsbedingungen einzuhalten, die normalerweise zu Polyethylen hoher Dichte führen, d.h. niedrige Drucke und Temperaturen und in Gegenwart von organometallischen Katalysatoren. Verfahren zur Herstellung von linearen Ethylencopolymerisaten mit niedriger Dichte sind in den US-Patenten Nr. 3 645 992 und 4 011 382 beschrieben. Die Ethylencopolymerisate, die erfindungsgemäß verwendet werden, sollten eine Dichte von <0,94, vorzugsweise eine Dichte von 0,900 bis 0,925, besonders bevorzugt 0,903 bis 0,915 g/cm$^3$ aufweisen.

Als niedermolekulare, mit dem LLDPE verträgliche Harze können natürliche oder synthetische Harze mit einem Erweichungspunkt von 60 bis 180°C, bevorzugt 80 bis 100°C, verwendet werden. Es sind solche Harze als verträglich anzusehen, die in einer Konzentration bis zu 30 Gew.-% der Siegelschicht zugemischt werden können, ohne daß eine Verschlechterung der optischen Eigenschaften der Folie eintritt. Hierfür können Collophonium, Dammarharze, Terpentinharze, Kohlenwasserstoffharze, Ketonharze, Phenolharze, chlorierte aliphatische oder aromatische Kohlenwasserstoffharze verwendet werden. Diese Harze sind in Ullmanns Encyclopädie der technischen Chemie, Band 12, 1976, Seiten 525 bis 555 beschrieben.

Vertreter der natürlichen Harze sind Collophonium und Dammarharze. Ersteres wird durch Abdestillieren von Terpentinöl aus den Harzen von Kiefern oder Wurzelstöcken gewonnen. Auch Collophoniumester sowie modifiziertes Collophonium wie dehydriertes, hydriertes oder fraktioniertes Collophonium wird darunter verstanden.

Dammarharze sind farblose bis gelbe Stoffe, die ebenfalls durch Lebendharzung gewonnen werden.

Als Kohlenwasserstoffharze bezeichnet man Polymerisate aus Kohlenstoff und Wasserstoff, die man bei der Kohlenteerdestillation, bei Crackprozessen von Naphtha- bzw. Gasöl aus Kokereigas oder aus Terpentinöl gewinnt. Typische Vertreter dieser Harze sind Cumeronharze, Erdölharze, Terpenharze, Styrolharze, Cyclopentadienharze.

Unter Cumeronharze versteht man Kohlenwasserstoffharze, die man aus Kokereigas oder durch Polymerisation von Harzbildnern, wie sie in den Steinkohlenteerdestillationen vorhanden sind, erhalten werden, wobei durch Copolymerisation mit Phenol modifizierte Cumeronharze gewonnen werden.

Bei der Crackung von Naphtha- oder Gasöl erhält man die Rohstoffbasis, aus der die Erdölharze gewonnen werden. Harzbildende Verbindungen sind unter anderem Buten, Butadien, Penten, Piperylen, Isopren, Cyclopentadien, Dicyclopentadien, Alkylbenzole, Methyldicyclopentadien, Methylinden, Naphthalinstyrolinden, Vinyltoluol, Methylstyrol.

Homopolymere mit geringem Molekulargewicht von Styrol und weiteren Copolymeren wie α-Methylstyrol, Vinyltoluol und Butadien sind ebenfalls als niedermolekulare Harze geeignet.

Die Cyclopentadienharze werden aus Steinkohlenteerdestillaten und abgetrennten Erdölgasen gewonnen. Die Polymerisate erhält man, indem man die ungesättigten Verbindungen über einen längeren Zeitraum hohen Temperaturen aussetzt.

Die Terpenharze gewinnt man durch Polymerisation von Terpenen wie z.B. von β-Pinen, α-Pinen, Dipenten, Limonen, Myncen, Bornylen, Camphen und ähnlichen Terpenen.

Die chlorierten aliphatischen oder aromatischen Kohlenwasserstoffe enthalten im allgemeinen 30 bis 70 Gew.-% Chlor und sind unter dem Namen Chlorwachse bekannt bzw. leiten sich vom Biphenylchlorid, Terphenyl oder deren Mischungen ab.

Die genannten Kohlenwasserstoffharze können auch als modifizierte Produkte eingesetzt werden. Eine Modifizierung durch Copolymerisation mit speziellen Monomeren oder durch Reaktion mit weiteren Polymerisaten, insbesondere aber eine Hydrierung oder Teilhydrierung der ungesättigten Bestandteile der Harze ist möglich. Besonders bevorzugt wird ein hydriertes, polycyclisches Kohlenwasserstoffharz auf Basis Cyclopentadien eingesetzt.

Auch Phenolharze, die man durch Reaktion von Phenolen und Aldehyden erhält, sind geeignet. Neben Phenol können Kresol, Xylenol, p-Phenylphenol mit Formaldehyd, Furfurylaldehyd oder Acetaldehyd kondensiert werden.

Als Komponente c) enthält die siegelbare Schicht eine Mischung aus einem Polyethylenwachs und einen Oxazolinwachs, hergestellt aus Stearinsäure und einem Aminoalkohol. Als Aminoalkohol wird bevorzugt Trishydroxymethylaminomethan eingesetzt. Die beiden Mischungskomponenten können in einem breiten Mischungsbereich verwendet werden, vorzugsweise in einem Gewichtsmischungsverhältnis von 1 : 1.

Weiterhin enthält die siegelbare Schicht Polydiorganosiloxane oder deren Mischungen, die bei 25 °C eine kinematische Viskosität von mindestens 100 mm²/Sekunde aufweisen. Geeignete Polydiorganosiloxane sind Polydialkylsiloxane, Polyalkylphenylsiloxane, olefinmodifizierte Siloxanöle, polyethermodifizierte Siloxanöle, olefin/polyethermodifizierte Silikonöle, epoxymodifizierte Silikonöle und alkoholmodifizierte Silikonöle, Polydialkylsiloxane mit vorzugsweise $C_1$ bis $C_4$ in der Alkylgruppe, insbesondere Polydimethylsiloxan ist besonders geeignet. Vorzugsweise sollten die Polydiorganosiloxane eine kinematische Viskosität von wenigstens $10^5$ mm² pro Sekunde bei 25 °C, besonders bevorzugt von wenigstens $10^6$ mm² pro Sekunde aufweisen.

Eine Ausrüstung der Schichten mit üblichen Additiven und Hilfsmitteln wie z.B. Gleitmitteln, Antiblockmitteln und Antistatika in üblichen Mengen ist möglich. So können ungesättigte Fettsäureamide gesättigte Fettsäureamide wie z.B. Stearinsäureamid, Erucasäureamid, mit dem LLDPE der Siegelschicht unverträgliche thermoplastische Polymere wie z.B. Polyamid-12, anorganische Abstandshalter oder antistatische Verbindungen wie langkettige, aliphatische, tertiäre Amine, die gegebenenfalls einfach ungesättigt sein können, wie ethoxylierte tertiäre Amine, z.B. N,N-Bis-(Hydroxyethyl)($C_{12}$–$C_{16}$)-alkylamin eingesetzt werden.

Die erfindungsgemäßen Mehrschichtfolien können nach üblichen Verfahren wie Laminierung, Beschichtung oder Schmelz(Co)extrusion hergestellt werden, wobei die Kombination, aus der die siegelbare Schicht besteht, durch Masterbatch, vorzugsweise aber durch direkte Compoundierung hergestellt werden kann.

Die Reckung sollte in Längsrichtung vorzugsweise im Verhältnis 5 : 1 bis 7 : 1 und die Querrichtung vorzugsweise im Verhältnis 7 : 1 bis 10 : 1 vorgenommen werden. Dabei sollte ein Verhältnis der Dichte der Folie nach der Reckung zu der Dichte vor der Reckung von höchstens 0,9 erreicht werden.

Die erfindungsgemäßen Mehrschichtfolien sollten vorzugsweise eine Dicke von 20 bis 80 µm aufweisen, wovon die Dicke der heißsiegelbaren Schicht vorzugsweise eine Dicke von 0,8 bis 2 µm, besonders bevorzugt 1 µm, haben soll.

Die erfindungsgemäßen opaken Mehrschichtfolien eignen sich wegen ihrer hervorragenden Verarbeitungseigenschaften auf schnell laufenden Verpackungsmaschinen und besonders wegen ihrer niedrigen Siegelanspringtemperatur als Verpackungsmaterial, insbesondere für Lebensmittel und Süßigkeiten und können zu diesem Zweck bedruckt und mit Aufreißstreifen versehen werden.

In den nachfolgenden Beispielen wurden folgende Prüfmethoden zur Bestimmung der Werte verwendet.

Zur Bestimmung des Glanzes der Folie wurde ein photoelektrischer Glanzmesser nach Dr. B. Lange, Berlin, verwendet, bestehend aus einer Niedervoltglühlampe und einem Kondensor, die unter 45° die Probe beleuchten, und einem zweiten unter 45° zur Meßebene stehenden Schenkel mit Lochblende und Photozelle. Angeschlossen ist ein fein regulierbares Anzeigegerät (Mikroampermeter), das außerdem die Stromversorgung und den Spannungskonstanthalter für die Glühlampe enthält.

Der Glanz ist definiert als der unter 45° regulär reflektierte Lichtanteil in Prozenten, bezogen auf einen oberflächenversilberten Spiegel als 100%iger Standard. Bei der Prüfung des Glanzes wird auf den Glanzmesser eine polierte Schwarzglasplatte als Zwischenstandard gesetzt, weil der Silberspiegelstandard nicht beständig im Anlaufen durch Luftverunreinigung ist. Dieser weist genau 5% des Glanzes einer oberflächenversilberten Spiegelglasplatte auf. Die Galvanometeranzeige der Photozelle des Glanzmessers wird daher über den Schwarzglaszwischenstandard zwecks Erhöhung der Ablesegenauigkeit der Mikroeinteilung mit dem Regelpotentiometer eingestellt. Die zu prüfende Folie wird quer zur Laufrichtung, bezogen auf die optische Achse des Glanzmessers, über mattschwarzem Photopapier plan unter den Glanzmesser gelegt und an fünf einwandfreien Stellen gemessen. Man teilt die Galvanometeranzeige durch zehn und ermittelt den Mittelwert.

Zur Bestimmung der Festigkeit von Siegelnähten wird die Siegelfestigkeit bei niedrigem Siegeldruck geprüft. Dabei wird unter Siegelfestigkeit die Kraft verstanden, die erforderlich ist, um eine unter definierten Bedingungen (0,35 N/cm, 0,5 sec und den in der Tabelle angegebenen Temperaturen) hergestellte Siegelnaht zu trennen. Die Siegelfestigkeit wird in Newton angegeben und ist auf einen 15 mm breiten Prüfstreifen bezogen.

Beispiele 1 bis 4

Zur Herstellung einer opaken Mehrschichtfolie wird eine heißsiegelbare Kombination aus einem linearen, statischen Ethylencopolymeren, das ungefähr 4 Mol-% Octeneinheiten einpolymerisiert enthält und eine Dichte von 0,911 g/cm$^3$ aufweist, 0,5 Gew.-% von Polydimethylsiloxan mit einer kinematischen Viskosität von 10$^6$ mm$^2$ pro Sekunde, 0,5 Gew.-% einer 1 : 1-Mischung von Polyethylenwachs und einem Oxazolinwachs, 0,15 Gew.-% eines thermoplastischen Polyamid-12. als Abstandshalter, 0,2 Gew.-% Stearinsäureamid, 0,2 Gew.-% Eruca-säureamid und 0,5 Gew.-% N,N-Bis-(2-hydroxyethyl)-(C$_{12}$-C$_{16}$)-alkylamin und die in der nachfolgenden Tabelle angegebenen Gewichtsprozente eines niedermolekularen hydrierten, polycyclischen Kohlenwasserstoffharzes auf der Basis von Cyclopentadien (ESCOREL ®5000) hergestellt und nach üblichen Verfahren auf beide Oberflächen der Basisfolie aus Polypropylen der Dichte 0,905 g/cm$^3$, dem Schmelzindex von 3,3 g/ 10 Minuten bei 230 °C, 21,6 N und dem Erweichungsbereich von 160 bis 166 °C, die 12 Gew.-% CaCO$_3$ fein verteilt enthält, aufgebracht und mit einer Längsreckung im Verhältnis 5 : 1 und einer Querreckung im Verhältnis 10 : 1 orientiert, wobei eine Verbundfolie mit einer Dicke 1 µm/38 µm/ 1 µm erhalten wird.

| | Beispiel 1 | Beispiel 2 | Beispiel 3 | Beispiel 4* |
|---|---|---|---|---|
| LLPDE Gew.-% | 95 | 90 | 80 | 100 |
| Kohlenwasserstoffharz Gew.-% | 5 | 10 | 20 | – |
| Glanz (GE) | 44,5 | 45,5 | 46 | 44 |
| Niederdrucksiegelung Siegelfestigkeit (N/15 mm) | | | | |
| 85° C | 1,5 | 1,6 | 2,0 | 0 |
| 90° C | 1,8 | 2,1 | 2,2 | 0,7 |
| 100° C | 2,1 | 2,2 | 2,5 | 1,3 |
| 110° C | 2,2 | 2,2 | 2,6 | 1,8 |

*) Vergleichsbeispiel

**Patentansprüche**

1. Opake, heißsiegelbare Mehrschichtfolie aus einer biaxial gereckten Basisschicht aus Propylenpolymeren, die 3–15 Gew.-% mit den Propylenpolymeren unverträgliche, fein verteilte Additive enthält, und wenigstens einer mindestens monoaxial gereckten siegelbaren Schicht aus einer Kombination von

a) 66,5 bis 94,5 Gew.-% eines linearen, statischen Ethylencopolymeren mit niedriger Dichte (LLDPE)

b) 5 bis 30 Gew.-% eines niedermolekularen, mit dem LLDPE verträglichen Harzes mit Ausnahme eines niedermolekularen Harzes aus α-Olefinen mit höchstens 3 C-Atomen,

c) 0,3 bis 2 Gew.-% einer Mischung aus einem Polyethylenwachs und einem Oxazolinwachs,

d) 0,2 bis 1,5 Gew.-% eines Polydiorganosiloxans und

e) gegebenenfalls üblichen Additiven und Hilfsstoffen, wobei die Summe aus a) bis d) immer 100 Gew.-% ergeben muß.

2. Mehrschichtfolie nach Anspruch 1, dadurch gekennzeichnet, daß die Kombination aus 78 bis 89,1 Gew.-% der Komponente a), 10 bis 20 Gew.-% der Komponente b), 0,5 bis 1 Gew.-% der Komponente c) und 0,4 bis 1 Gew.-% der Komponente d) besteht.

3. Mehrschichtfolie nach Anspruch 1 oder 2, dadurch gekennzeichnet, daß als Komponente a) ein Ethylencopolymeres aus Ethylen und bis zu 12 Mol %, vorzugsweise 2–8 Mol %, wenigstens eines weiteren α-Olefins mit C$_3$–C$_{10}$ verwendet wird, das eine Dichte von <0,94, vorzugsweise von 0,900 bis 0,925, besonders bevorzugt 0,903 bis 0,915 g/cm³ aufweist.

4. Mehrschichtfolie nach Anspruch 3, dadurch gekennzeichnet, daß als weiteres Comonomeres Propylen, Buten-1, Penten, Hexen, Octen, Nonen, Decen oder 4-Methylpenten-1, bevorzugt 1-Buten, Hexen oder Octen verwendet wird.

5. Mehrschichtfolie nach Ansprüchen 1 bis 4, dadurch gekennzeichnet, daß die Basisschicht 8–12 Gew.-% des mit den Propylenpolymeren unverträglichen Additivs, vorzugsweise eines anorganischen Additivs mit einer mittleren Teilchengröße von 0,2–20 µm, vorzugsweise 2–8 µm, enthält.

6. Mehrschichtfolie nach Ansprüchen 1 bis 5, dadurch gekennzeichnet, daß als Komponente b) ein natürliches oder synthetisches Harz mit einem Erweichungspunkt von 60 bis 180 °C verwendet wird.

7. Mehrschichtfolie nach Anspruch 6, dadurch gekennzeichnet, daß als Harze Collophonium, Dammarharze, Terpentinharze, Kohlenwasserstoffharze, Ketonharze, Phenolharze, chlorierte aliphatische oder aromatische Wasserstoffharze, bevorzugt modifizierte Kohlenwasserstoffharze verwendet werden.

8. Mehrschichtfolie nach Anspruch 6 oder 7, dadurch gekennzeichnet, daß als Harz ein hydriertes, polycyclisches Kohlenwasserstoffharz auf Basis Cyclopentadien eingesetzt wird.

9. Mehrschichtfolien nach Ansprüchen 1 bis 8, dadurch gekennzeichnet, daß als Komponente c) eine Mischung aus einem Polyethylenwachs und einem Oxazolinwachs, hergestellt aus Stearinsäure und einem Aminoalkohol, bevorzugt Trishydroxymethylaminomethen, vorzugsweise in einem Gewichtsmischungsverhältnis von 1 : 1, eingesetzt wird.

10. Verwendung der Mehrschichtfolie nach Ansprüchen 1 bis 9 als Verpackungsmaterial.

**Claims**

1. An opaque, heat-sealable multilayer film comprising a biaxially stretched base layer of propylene polymers, which contains from 3 to 15% by weight finely divided additives incompatible with the propylene polymers, and at least one at least monoaxially stretched sealable layer of a combination of

a) 66.5 to 94.5% by weight of a linear, low-density statistical ethylene copolymer (LLDPE),

b) 5 to 30% by weight of a low molecular weight resin compatible with the LLDPE, except for a low molecular weight resin of α-olefins containing at most 3 C atoms,

c) 0.3 to 2% by weight of a mixture of a polyethylene wax and an oxazoline wax,

d) 0.2 to 1.5% by weight of a polydiorganosiloxane and

e) optionally standard additives and auxiliaries, the sum of a) to d) always having to be 100%.

2. A multilayer film as claimed in claim 1, characterized in that the combination consists of 78 to 89.1% by weight of component a), 10 to 20% by weight of component b), 0.5 to 1% by weight of component c) and 0.4 to 1% by weight of component d).

3. A multilayer film as claimed in claim 1 or 2, characterized in that an ethylene copolymer of ethylene and up to 12 mol-% and preferably 2 to 8 mol-% of at least one other α-olefin containing 3 to 10 carbon atoms, which has a density of < 0.94, preferably in the range from 0.900 to 0.925 and more preferably in the range from 0.903 to 0.915 g/cm³, is used as component a).

4. A multilayer film as claimed in claim 3, characterized in that propylene, 1-butene, pentene, hexene, octene, nonene, decene or 4-methyl-1-pentene, preferably 1-butene, hexene or octene, is used as the other comonomer.

5. A multilayer film as claimed in claims 1 to 4, characterized in that the base layer contains 8 to 12% by weight of the additive incompatible with the propylene polymers, preferably an inorganic additive having an average particle size of 0.2 to 20 µm and preferably of 2 to 8 µm.

6. Multilayer films as claimed in claims 1 to 5, characterized in that a natural or synthetic resin having a softening point in the range from 60 to 180 °C is used as component b).

7. Multilayer films as claimed in claim 6, characterized in that colophony, dammar resins, turpentine resins, hydrocarbon resins, ketone resins, phenolic resins, chlorinated aliphatic or aromatic hydrocarbon resins, preferably modified hydrocarbon resins, are used as the resins.

8. A multilayer film as claimed in claim 6 or 7, characterized in that a hydrogenated, polycyclic hydrocarbon resin based on cyclopentadiene is used as the resin.

9. Multilayer film as claimed in claims 1 to 8, characterized in that a mixture of a polyethylene wax and an oxazoline wax prepared from stearic acid and an aminoalcohol, preferably trishydroxymethylaminomethene, preferably in a total mixing ratio of 1 : 1, is used as component c).

10. The use of the multilayer film claimed in claims 1 to 9 as a packaging material.

**Revendications**

1. Feuille multicouche opaque, thermoscellable, comportant une couche de base étirée biaxialement en polymère de propylène, contenant 3 à 15% en poids d'additif finement divisé incompatible avec le polymère de propylène et au moins une couche scellable étirée mono-axialement consistant en une combinaison de

a) 66,5 à 94,5% en poids d'un copolymère d'éthylène statique à chaîne linéaire à faible densité (LLDPE),

b) 5 à 30% en poids d'une résine à faible poids moléculaire compatible avec le LLDPE à l'exception d'une résine à faible poids moléculaire d'α-oléfines avec au maximum 3 atomes de carbone,

c) 0,3 à 2% en poids d'un mélange d'une cire polyéthylénique et d'une cire d'oxazoline,

d) 0,2 à 1,5% en poids d'un polydiorganosiloxane et

e) éventuellement des additifs et adjuvants usuels, la somme des composants a) à d) devant donner un total de 100% en poids.

2. Feuille multicouche selon la revendication 1, caractérisée en ce que la combinaison consiste en 78 à 89,1% en poids du composant a), 10 à 20% en poids du composant b), 0,5 à 1% en poids du composant c) et 0,4 à 1% en poids du composant d).

3. Feuille multicouche selon la revendication 1 ou 2, caractérisée en ce que l'on utilise comme composant a) un copolymère d'éthylène et jusqu'à 12 moles %, de préférence 2 à 8 moles %, d'au moins une autre α-oléfine en $C_3$–$C_{10}$, présentant une masse volumique <0,94, de préférence de 0,900 à 0,925, de préférence particulière de 0,903 à 0,915 g/cm³.

4. Feuille multicouche selon la revendication 3, caractérisée en ce que l'on utilise comme autre comonomère le propylène, le butène-1, le pentène, l'hexène, l'octène, le nonène, le décène ou le 4-méthylpentène-1, de préférence le 1-butène, l'hexène ou l'octène.

5. Feuille multicouche selon les revendications 1 à 4, caractérisée en ce que la couche de base contient 8 à 12% en poids de l'additif incompatible avec les polymères de propylène, de préférence un additif inorganique d'une granulométrie moyenne de 0,2 à 20 μm, de préférence de 2 à 8 μm.

6. Feuille multicouche selon les revendications 1 à 5, caractérisée en ce que l'on utilise comme composant b) une résine naturelle ou synthétique d'un point de ramollissement de 60 à 180°C.

7. Feuille multicouche selon la revendication 6, caractérisée en ce que l'on utilise comme résines la colophane, des résines de dammar, des résines de térébenthine, des résines d'hydrocarbures, des résines cétoniques, des résines phénoliques, de préférence des résines hydrocarbonées modifiées.

8. Feuille multicouche selon la revendication 6 ou 7, caractérisée en ce que l'on utilise comme résine une résine d'hydrocarbure polycyclique hydrogénée à base de cyclopentadiène.

9. Feuille multicouche selon les revendications 1 à 8, caractérisée en ce que l'on utilise comme composant c) un mélange d'une cire polyéthylénique et d'une cire d'oxazoline, fabriqué à partir d'acide stéarique et d'un aminoalcool, de préférence le trishydroxyméthylaminométhène, de préférence dans un rapport pondéral de mélange de 1 : 1.

10. Utilisation de la feuille multicouche selon les revendications 1 à 9 comme matériau d'emballage.